# EUROPEAN PATENT APPLICATION

(11) **EP 4 070 758 A1**
(43) Date of publication of application: **12.10.2022**
(21) Application number: 20896315.7
(22) Date of filing: 01.12.2020
(51) Int. Cl.: A61C 7/08

(54) **ORTHODONTIC APPLIANCE**

(30) Priority: 02.12.2019 JP 2019217679
(71) Applicant: DSi Corporation, Chuo-ku Tokyo 104-0061 (JP)
(72) Inventor: SATO Hiroshi, Tokyo 104-0061 (JP)
(74) Representative: Marks & Clerk LLP
(86) International application number: PCT/JP2020/044588
(87) International publication number: WO 2021/112057

(57) **Abstract**

A mouthpiece 1 has an outer shape on a lip side or a cheek side, the outer shape being formed based on an ideal position of an orthodontic target tooth of a patient, and an inner surface shape formed such that a predetermined orthodontic force is applied to the orthodontic target tooth.

## Description

### [Technical Field]

The present invention relates to an orthodontic appliance, and particularly relates to a method for increasing aesthetics in performing orthodontic treatment that uses mouthpieces.

### [Background Art]

Conventionally, mouthpiece-type orthodontic appliances have been provided. A mouthpiece is mounted such that the mouthpiece covers the whole or a part of the dentition of a patient. When the mouthpiece is mounted, a pressing force is applied to some teeth by the mouthpiece in a direction determined in advance. By mounting the mouthpiece on the whole or the part of the dentition for a certain period of time, the positions of the teeth are gradually adjusted. Usually, a dentist makes a series of plans for orthodontic treatment including a plurality of steps, and a supplier forms mouthpieces to be used in respective processes according to the plan. The patient changes the mouthpiece one after another at each step to gradually adjust the dentition to the correct position.

A process for forming a mouthpiece is substantially as follows. The dentist acquires intraoral scan data or the dental model of the patient and makes a plan for orthodontic treatment. According to the intraoral scan data or three-dimensional data of the dental model and the plan for orthodontic treatment, the supplier creates three-dimensional CAD data for the respective mouthpieces to be used in the respective steps in the plan for orthodontic treatment. Based on the three-dimensional CAD data, the mouthpieces are formed with a stereolithography 3D printer or the like that uses a photocurable resin, for example (see Patent Literature 1).

### [Citation List]

### [Patent Literature]

[Patent Literature 1] Japanese Patent Laid-Open No. 2018-94245

### [Summary of Invention]

### [Technical Problem]

A conventional mouthpiece has the problem of lacking aesthetics during orthodontic treatment. First, the conventional mouthpiece is usually formed by using a transparent resin or the like as a material and hence, it can be noticed that the patient is wearing the mouthpiece. In addition to the above, the conventional mouthpiece is formed based on the shape of the current dentition and hence, the outer shape of the conventional mouthpiece is not ideal.

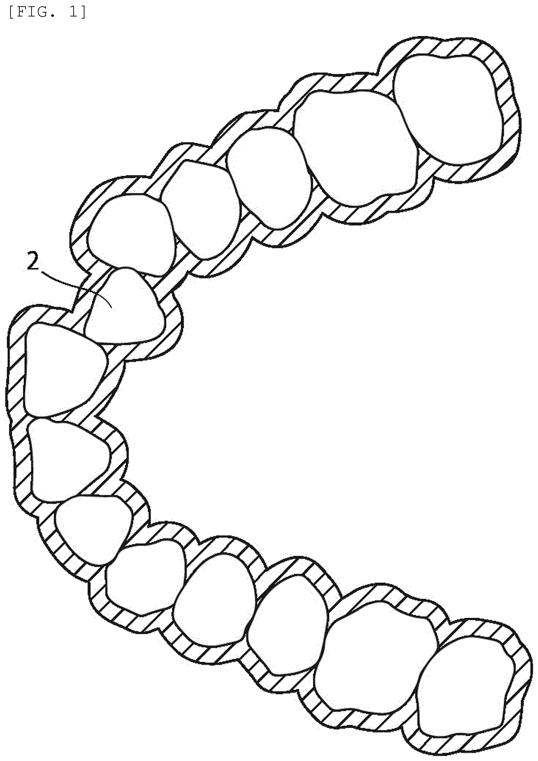

Figure 1 is a view showing a state where the conventional mouthpiece is mounted on the dentition in orthodontic treatment. In this example, an orthodontic target tooth (hereinafter referred to as "target tooth 2") is somewhat retracted inwardly compared with other teeth. The purpose of performing orthodontic treatment is to form a well-aligned dentition by pressing the target tooth 2 forward. In the process of orthodontic treatment, mouthpieces formed according to the plan for orthodontic treatment are provided to the patient one after another. As shown in Figure 1, the outer shape of the mouthpiece is substantially close to the shape of the current dentition. As each mouthpiece gradually presses the target tooth 2, the outer shape of the mouthpieces being provided gradually approach the ideal dentition.

However, orthodontic treatment requires a long period of time. If it is possible to provide a mouthpiece having a shape close to an ideal dentition and having excellent aesthetics, it is possible to improve quality of life of the patient during such a period of time.

The present invention has been made to solve such a problem, and it is an object of the present invention to provide an orthodontic appliance having excellent aesthetics.

### [Solution to Problem]

A mouthpiece according to one embodiment of the present invention has an outer shape on the lip side or the cheek side, the outer shape being formed based on an ideal position of an orthodontic target tooth, and an inner surface shape formed such that a predetermined orthodontic force is applied to the orthodontic target tooth.

The mouthpiece according to one embodiment of the present invention is made of a material substantially of a milky white color.

### [Advantageous Effect of Invention]

The present invention can provide an orthodontic appliance having excellent aesthetics.

### [Brief Description of Drawings]

[Figure 1] Figure 1 is a view showing a conventional mouthpiece.
[Figure 2] Figure 2 is a view showing a mouthpiece 1 according to an embodiment of the present invention.

### [Description of Embodiment]

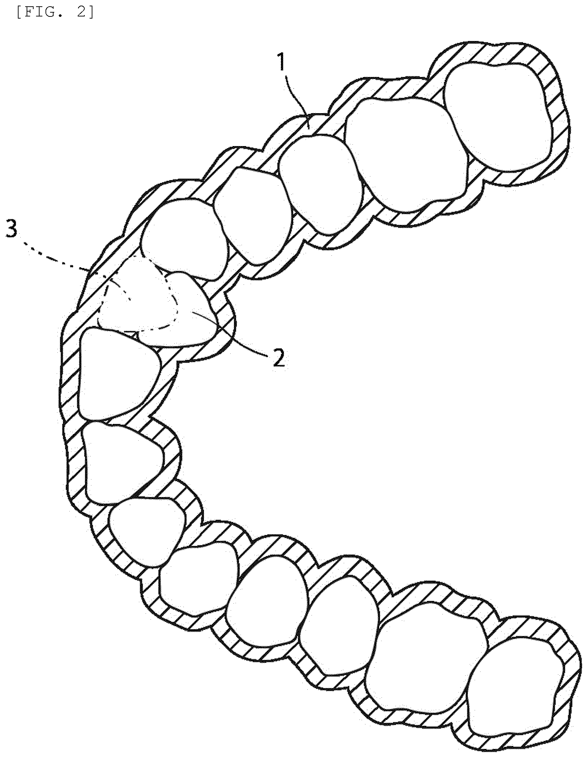

Hereinafter, a specific embodiment to which the present invention is applied will be described in detail with reference to drawings. Figure 2 is a view showing a state where a mouthpiece 1 according to the embodiment of the present invention is mounted on the dentition in orthodontic treatment.

The mouthpiece 1 is formed by using, as a material, a resin, or the like with a color tone (milky white or the like) close to the color tone of actual teeth (natural teeth). The mouthpiece 1 may also be formed such that at least only the front surface that is visible by others is made of a material with a color tone close to the color tone of the actual teeth, and other portions are made of a suitable material, such as a transparent resin, in the same manner as the conventional mouthpiece. With such a configuration, it is possible to provide a mouthpiece that can prevent others from being noticing the mouthpiece during wear, that is, to provide a mouthpiece having excellent aesthetics.

The outer shape of the mouthpiece 1, particularly, the shape of the front surface (the lip side or the cheek side) that is visible by others, is formed to reproduce the dentition that is intended after orthodontic treatment. As shown in Figure 1, the shape of the conventional mouthpiece has been designed based on the shape of the current dentition. In contrast, as shown in Figure 2, the mouthpiece 1 according to the present invention is designed based on the shape of the dentition that is intended after orthodontic treatment. In other words, the outer shape of the mouthpiece 1 is formed based on the ideal position of the target tooth 2.

In Figure 2, a dashed-and-double-dotted line shows the position of the target tooth 2 after orthodontic treatment is finished (hereinafter referred to as "ideal position 3"). The shape of the front surface of the mouthpiece 1 is designed based on the ideal position 3 of the target tooth 2. Therefore, the shape of a well-aligned dentition, where the target tooth 2 is aligned with other teeth, is formed on the front surface of the mouthpiece 1.

In contrast, the shape of the inner side (the contact surface with the teeth) of the mouthpiece 1 and the outer shape of a back surface (tongue side) are designed based on the current position of the target tooth 2. That is, the shape of the inner side (the contact surface with the teeth) of the mouthpiece 1 and the outer shape of the back surface (tongue side) are formed such that the mouthpiece 1 is brought into close contact with the back surface of the target tooth 2 to generate an orthodontic force. With such a configuration, the function of the mouthpiece 1 is ensured.

When the mouthpiece 1 is formed as described above, a certain gap is formed between the front surface of the mouthpiece 1 and the front surfaces of some teeth. This gap can be simply filled with a resin material or the like. A material used for filling the gap may be a material same as a material used for forming other portions of the mouthpiece 1, or may be a material that is different from the material used for forming other portions of the mouthpiece 1 and that does not easily affect rigidity and elasticity of the entire mouthpiece 1.

A typical method for forming the mouthpiece 1 is as follows. First, three-dimensional CAD data that form the base of the mouthpiece 1 are created based on intraoral scan data or three-dimensional data of a dental model. Next, based on the predicted position of the target tooth 2 after orthodontic treatment, that is, based on the ideal position 3, CAD data for the shape of the front surface of the corrected dentition are created. Lastly, the created three-dimensional CAD data are transferred to a 3D printer to output the mouthpiece 1.

According to the present embodiment, the mouthpiece 1 is made of a material with a color tone close to the color tone of actual teeth, and the shape of the front surface of the mouthpiece 1 is formed based on the ideal position 3 being the predicted position of the orthodontic target tooth. Accordingly, it is possible to provide a mouthpiece having excellent aesthetics.

The present invention is not limited to the above-mentioned embodiment, and may be suitably modified without departing from the gist of the present invention.

### [Reference Signs List]

- 1: mouthpiece
- 2: target tooth
- 3: ideal position

## Claims

1. A mouthpiece having
an outer shape on a lip side or a cheek side, the outer shape being formed based on an ideal position of an orthodontic target tooth, and
an inner surface shape formed such that a predetermined orthodontic force is applied to the orthodontic target tooth.

2. The mouthpiece according to claim 1, wherein the mouthpiece is made of a material substantially of a natural tooth color.
